# EUROPEAN PATENT SPECIFICATION

(11) **EP 3 642 817 B1**
(45) Date of publication and mention of the grant of the patent: **26.02.2025**
(21) Application number: 18732733.3
(22) Date of filing: 18.06.2018
(51) Int. Cl.: G08G 1/16, G01C 11/00, G01C 11/04, G01C 21/36

(54) **ASSISTED SINGLE-LANE ROAD DRIVING**
UNTERSTÜTZTES FAHREN AUF EINSPURIGER STRASSE
CONDUITE ASSISTÉE SUR ROUTE À UNE SEULE VOIE

(30) Priority: 22.06.2017 DE 102017113799
(43) Date of publication of application: 29.04.2020
(73) Proprietor: Connaught Electronics Ltd., Tuam, County Galway (IE)
(72) Inventor: SHIVAMURTHY, Swaroop Kaggere, Tuam County Galway (IE)
(74) Representative: Jauregui Urbahn, Kristian
(86) International application number: PCT/EP2018/066038
(87) International publication number: WO 2018/234201

(56) References cited:
- EP-A1- 0 827 127
- EP-A1- 1 585 082
- EP-A1- 3 132 988
- EP-A2- 1 037 186
- JP-A- H06 187 597
- JP-A- H06 187 597
- US-A- 5 762 292
- US-A1- 2010 228 426
- US-A1- 2010 228 426
- US-A1- 2013 266 175
- US-A1- 2013 266 175
- US-A1- 2013 266 186
- US-A1- 2013 266 186
- US-A1- 2014 270 479
- US-B1- 6 411 895
- US-B1- 6 411 895

## Description

The present invention refers to a method for driving assistance for a vehicle on a single-lane road with passing places.

The present invention also refers to a driving assistance system for a vehicle, which is adapted to perform the above method to perform driving assistance of a vehicle on a single-lane road with passing places.

Furthermore, the present invention refers to a vehicle with an above driving assistance system.

A single-lane road, a single-track road or a one-lane road is a road that in general allows two-way travel under the assumption of few traffic. Hence, the single-lane road is not wide enough in most places to allow two vehicles to pass one another. Even though in some cases, depending on the size of the vehicles, in particular the width of the vehicles, two vehicles can pass each other, this is in general not the case. To accommodate two-way traffic, many single-lane roads, especially those officially designated as such, are provided with passing places, as referred to in the United Kingdom, or pullouts or turnouts, as referred to in the United States, or simply wide spots in the road. The passing places are provided at a border of the road and provide a length width at least corresponding to dimensions of a typical vehicle. Hence, the passing places may be scarcely longer and wider than typical vehicles using the road. The distance between passing places varies considerably, depending on the terrain and the volume of traffic on the road. This single-lane road is common in rural areas.

Based on this road design, when two vehicles try passing each other, one of the vehicles has to safely maneuver to the nearest passing place and allow the other, oncoming vehicle to pass by. Maneuvering a vehicle to a passing place becomes difficult, when the nearest passing place is behind at some distance. A driver has to maneuver his vehicle in a backward direction for a longer distance, until the closest passing place has been reached. This is already a challenge for normal drivers driving normal vehicles, but becomes much worse when driving vehicles with a trailer. This is in particular relevant, when the distance between the passing places is large and/or visibility on the road is limited, so that oncoming traffic can only be detected at a short distance, so that a passing place cannot be chosen ahead to wait for the oncoming traffic.

Assistance systems for assisting drivers in such driving conditions on single-lane roads with passing places are not yet known, so that an improvement is desired. In EP1585082 A1 is described how to deal with narrow road using some positioning of the vehicle and an adapted route guidance. In US2013/266186 is described a method of detecting a clear path in a road of travel for a vehicle utilizing a top-down view classification technique. In US2013/266175 is described a method for detecting road edges in a road of travel for clear path detection.

It is an object of the present invention to provide a method for driving assistance for a vehicle on a single-lane road with passing places, a driving assistance system for a vehicle, which is adapted to perform the above method, and a vehicle with an above driving assistance system, which enable reliable and efficient driving assistance on single lane roads with passing places.

This object is achieved by the independent claims. Advantageous embodiments are given in the dependent claims.

In particular, the present invention provides a method for driving assistance for a vehicle on a single-lane road with passing places, comprising the steps of capturing consecutive video frames from a camera covering a driving direction of the vehicle, segmenting a road area in the consecutive video frames, detecting a single-lane road scenario based on road segmentation freespace, detecting the passing places along the single-lane road, storing information of passing places along the single-lane road, and upon detection of oncoming traffic, displaying the information regarding the closest passing place to a driver of the vehicle.

The present invention also provides a driving assistance system for a vehicle, which is adapted to perform the above method to perform driving assistance of a vehicle on a single-lane road with passing places.

The present invention further provides a vehicle with an above driving assistance system.

The basic idea of the invention is to enable driving assistance on single lane roads by performing an automatic detection of passing places, which can be stored for passing by other vehicles as required. Based on stored information in respect to the passing places, a maneuver can be started to easily reach the closest passing place. The stored information facilitates to reach the closest passing place and can serve as basis for further actions.

The segmentation of the road area enables a simple means for detecting the passing places. This enables reliable detection of passing places attached to narrow roads. The proposed method is rather simple and eases reverse maneuvering in difficult narrow road conditions. The proposed method is simple and embedded friendly, so that it can be easily implemented.

The consecutive video frames are captured from any kind of suitable camera, e.g. a surround camera, a front camera, or others. The camera can be a regular camera, or a stereo camera, which is arranged in the driving direction. Video frames correspond to single views as provided by the camera.

Segmenting the road area in the consecutive video frames refers to a recognition of the road area and the segmentation of the recognized road area into individual sectors.

The single-lane road scenario refers to a scenario, where a road in general permits two-way travel, but where the road is not wide enough in most places to allow two vehicles to pass one another. Hence, the single-lane roads are provided with passing places, as referred to in the United Kingdom, or pullouts, which enable two vehicles to pass each other. The single-lane road scenario is detected based on the road segmentation and a resulting freespace of the different segments or sectors. In addition, also the passing places are detected along the single-lane road based on the segmentation of the detected road.

The information of the passing places along the single-lane road is e.g. stored in a persistent memory of the vehicle or the driving assistance system. The oncoming traffic is detected in a known way. The driver can review the information, and/or start an action when selecting the displayed information.

According to a modified embodiment of the invention, the method comprises an additional step of performing an autonomous driving maneuver from the current position to the position of the closest passing place. This additional step can be performed also alternatively to the displaying step, i.e. alternatively to displaying the information regarding the closest passing place to a driver of the vehicle upon detection of oncoming traffic. When performing the autonomous driving maneuver from the current position to the position of the closest passing place, the vehicle can be moved by the driving assistance system, until the passing place has been reached. With the assistance system being enabled to perform the autonomous driving maneuver from the current position to the position of the closest passing place, driving on a single-lane road can be highly facilitated for many drivers.

According to a modified embodiment of the invention, the step of performing an autonomous driving maneuver from the current position to the position of the closest passing place comprises continuously displaying at least one information out of a start of the autonomous driving maneuver, a distance to the closest passing place, a velocity of the vehicle, an acceleration of the vehicle, a steering operation of the vehicle. The information can be displayed e.g. on a display of the vehicle, in particular of the driving assistance system, so that vehicle occupants and in particular a driver of the vehicle are continuously informed in respect to a current state of the autonomous driving maneuver from the current position to the position of the closest passing place. This can amongst others be helpful for the driver to prepare to take over control of the vehicle, when the autonomous driving maneuver has stopped.

According to a modified embodiment of the invention, the step of performing an autonomous driving maneuver from the current position to the position of the closest passing place comprises performing in a backward driving direction of the vehicle the steps of capturing consecutive video frames from a camera covering the backward driving direction of the vehicle, segmenting a road area in the consecutive video frames, and detecting the closest passing place along the single-lane road. Hence, the principles discussed above to detect a passing place can be similarly applied to autonomously driving the vehicle backwards to the closest passing place. Once the closest passing place has been reached, the maneuver of the vehicle from the current position to the position of the closest passing place can be stopped. The vehicle can be maneuvered from the single-lane road onto the passing place, so that the oncoming traffic, in particular the oncoming vehicle, can pass the vehicle. The vehicle can be maneuvered onto the passing place either manually by a driver, or autonomously by a driving assistance system.

According to a modified embodiment of the invention, the step of performing an autonomous driving maneuver from the current position to the position of the closest passing place comprises extracting localized map information from a storage and displaying the extracted localized map information to the driver. The localized map information can be provided based on e.g. stored map information, in particular together with received satellite position signals, e.g. GPS signals, which specify a particular position on the localized map. The stored information can comprise odometry information of the vehicle including e.g. a steering wheel angle, a vehicle speed, wheel rotation of one or multiple wheels, in particular wheel tics, or others. Hence, the local map can be generated based on this odometry information. Based on the odometry information, a movement path can be determined, which can be followed in a reverse direction to return to the closest passing place.

According to a modified embodiment of the invention, the step of segmenting a road area in the consecutive video frames comprises performing a luminance based and/or a color based and/or a texture based segmentation algorithm. Hence, the road is identified by means of its distinguishing features compared to the surrounding environment. Such algorithms are known in the Art and need not to be discussed in detail.

According to a modified embodiment of the invention, the step of detecting a single-lane road scenario based on road segmentation freespace comprises additional steps of segmentation of freespace based on road boundaries, and performing a spatial analysis of freespace sectors. Hence, when segmenting the detected road into different sectors, the length of the sectors typically varies with the relative position of a sector. Typically, single-lane roads have lengthy freespace sectors, which correspond to the middle of the road, whereas lateral freespace sectors experience a sharp reduction in length and thereby in freespace, since they are limited by left and right boundaries of the road area. A stable, average freespace sector pattern can be stored in a persistent memory for detection of passing places, which deviate from this average freespace sector pattern. A number of freespace sectors can be chosen suitably, e.g. in a way that each freespace sector covers an angle of 10°, 15°, 18°, 22,5°, 30° or others.

According to a modified embodiment of the invention, the step of detecting passing places along the single-lane road comprises detection and analysis of lateral road edge boundaries. Left and right boundaries of the road are typically straight and essentially parallel to each other. This can also be represented by an average freespace sector pattern. Hence, when a passing place is provided, the passing place is typically provided with the same material as the road itself, so that a lateral extension of the road area can easily be detected. In other words, the road area extends over the normal ground boundaries. In this case, the respective freespace sector has an increased length in an area of the passing place, which indicates the presence of the passing place.

According to a modified embodiment of the invention, the method comprises an additional step of monitoring a distance to the closest passing place, and the step of displaying the information regarding the closest passing place to a driver of the vehicle comprises displaying a distance to the closest passing place. Based on the distance information, a driver can prepare and decide already in advance in respect to possible actions to take. Hence, even if not yet visible, in case the closest passing place is already far away, it might be beneficial to advance further expecting to find a further passing place ahead, instead of returning the whole way to the closest passing place behind. The distance to the closest passing place can also serve as basis for calculating or estimating a time required to reach the closest passing place, which has been passed previously.

According to a modified embodiment of the invention, the step of monitoring a distance to the closest passing place comprises determining the distance to the closest passing place based on satellite navigation data. Satellite navigation is nowadays available at most location based on different standards, which include GPS, Glonass, Galileo, und Beidou. Satellite navigation data enables identifying a position of the vehicle and, together with a local map, determining a correct way back to the closest passing place.

According to a modified embodiment of the invention, the step of monitoring a distance to the closest passing place comprises additional steps of determining vehicle odometry information, and determining a distance to the closest passing place based on the odometry information. Vehicle odometry information can be used independent from availability of satellite navigation, either availability of respective satellite navigation signals, or availability of a receiver for the satellite navigation signals in the vehicle. The odometry information of the vehicle may comprise e.g. a steering wheel angle, a vehicle speed, wheel rotation of one or multiple wheels, in particular wheel tics, or others. The vehicle odometry information can be used to determine a movement of the vehicle.

According to a modified embodiment of the invention, the method comprises an additional step of determining vehicle odometry information, and determining a vehicle movement from the closest passing place. The odometry information of the vehicle may comprise e.g. a steering wheel angle, a vehicle speed, wheel rotation of one or multiple wheels, in particular wheel tics, or others. Based on the odometry information, a movement path can be determined, which can be followed in a reverse direction to return to the closest passing place. Furthermore, a local map can be generated based on the odometry information.

According to a modified embodiment of the invention, the step of storing information of passing places along the single-lane road comprises determining and storing positions of the passing places, and the step of displaying the information regarding the closest passing place to a driver of the vehicle comprises displaying a current position and driving information between the current position and the position of the closest passing place. This enables provisioning a detailed information in respect to the position of the closest passing place to the driver. The positions can be displayed e.g. as local map, which provides a trajectory from the current position to the closest passing place. According to a modified embodiment of the invention, the method comprises an additional step of providing the stored positions of the passing places to a server. Hence, information regarding located passing places can be shared, e.g. so that map information can be updated. Furthermore, information regarding located passing places can be transmitted to other vehicles in the area, which do not have a proper assistance system, which is able to detect passing places on its own.

These and other aspects of the invention will be apparent from and elucidated with reference to the embodiments described.

In the drawings:
- Fig. 1: shows a perspective view of a single-lane road with a passing place in accordance with a first, preferred embodiment of the invention,
- Fig. 2: shows a perspective view of the single-lane road without a passing place together with a road segmentation in accordance with the first, preferred embodiment of the invention,
- Fig. 3: shows a perspective view of the single-lane road with a passing place together with a road segmentation in accordance with the first, preferred embodiment of the invention,
- Fig. 4: shows a perspective view of the single-lane road with a passing place together with a road segmentation, road boundaries and a limitation of a detected road area in accordance with the first, preferred embodiment of the invention,
- Fig. 5: shows a schematic view of a pullout feedback module in accordance with the first, preferred embodiment of the invention,
- Fig. 6: shows a schematic view of an auto pullout maneuver module in accordance with the first, preferred embodiment of the invention,
- Fig. 7: shows a schematic view of a vehicle with a driving assistance system according to the first, preferred embodiment of the invention, and
- Fig. 8: shows a flow chart of a method for driving assistance according to the first, preferred embodiment of the invention.

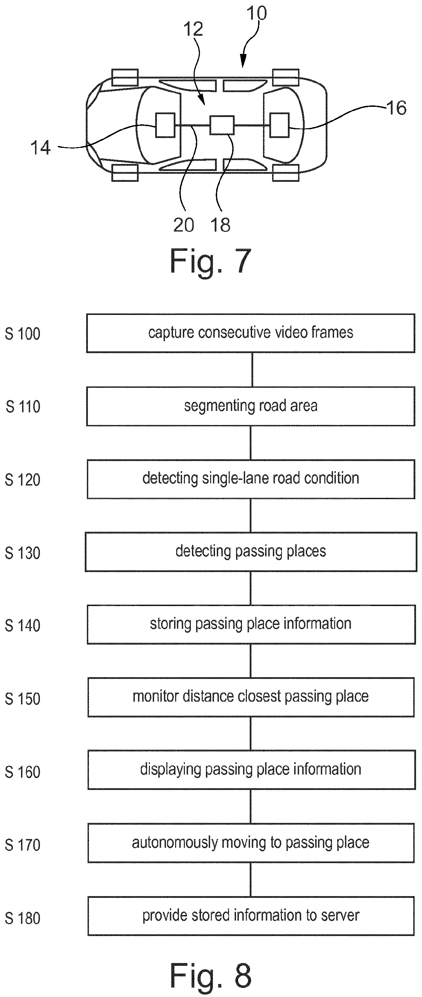

Figure 7 shows a vehicle 10 with a driving assistance system 12 according to a first, preferred embodiment of the invention.

The driving assistance system 12 comprises a front camera 14, a rear camera 16, and a control unit 18, which is connected to the front camera 14 and the rear camera 16 via communication bus 20.

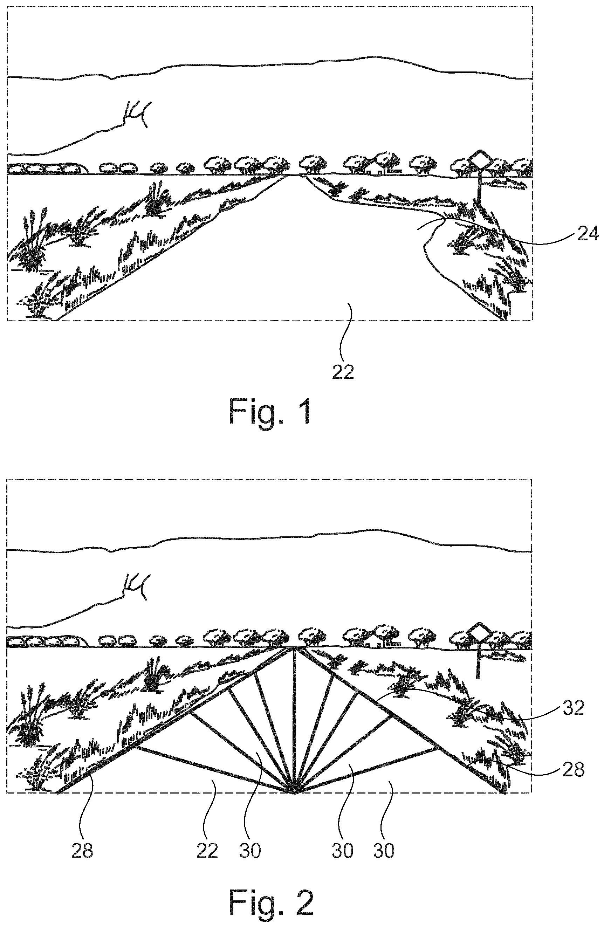

Below will be described a method for driving assistance for a vehicle 10 on a single-lane road 22 with passing places 24 according to the first embodiment. The method is performed with the vehicle 10 and the driving assistance system 12 of the first embodiment. The method will be discussed based on a method flow chart shown in Fig. 8 and additional figures 1 to 6.

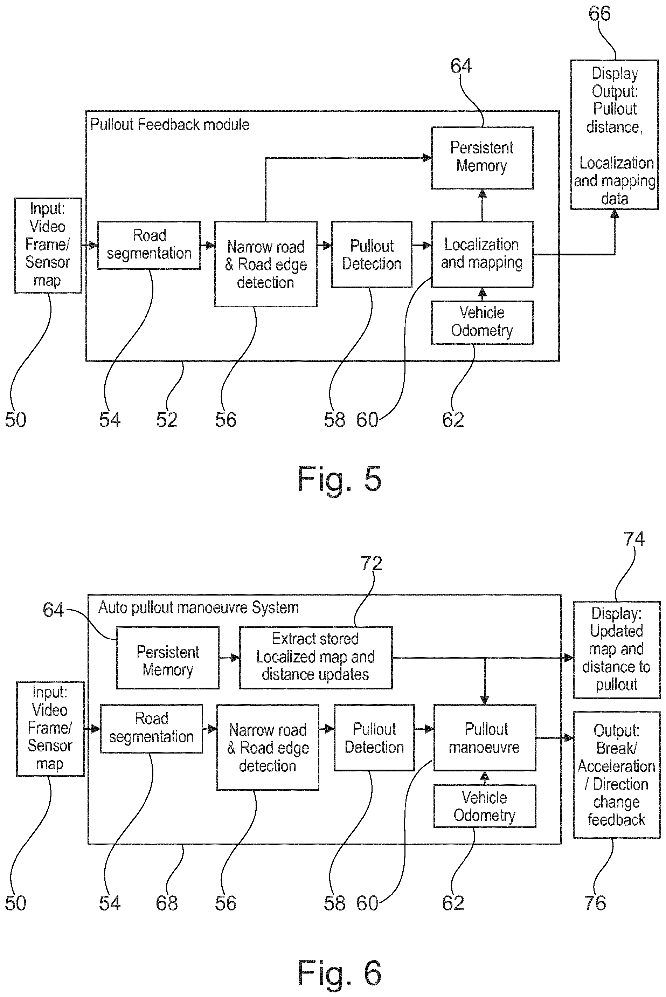

The method starts with step S100, which refers to capturing consecutive video frames from the front camera 14, which cover a driving direction of the vehicle 10. The front camera 14 is a regular camera in this embodiment. The video frames correspond to single views as subsequently provided by the front camera 14. Step S100 is performed by a pullout feedback module 52 of the control unit 18, as can be seen in Fig. 5. The pullout feedback module 52 receives the video frames as input 50 from the front camera 14.

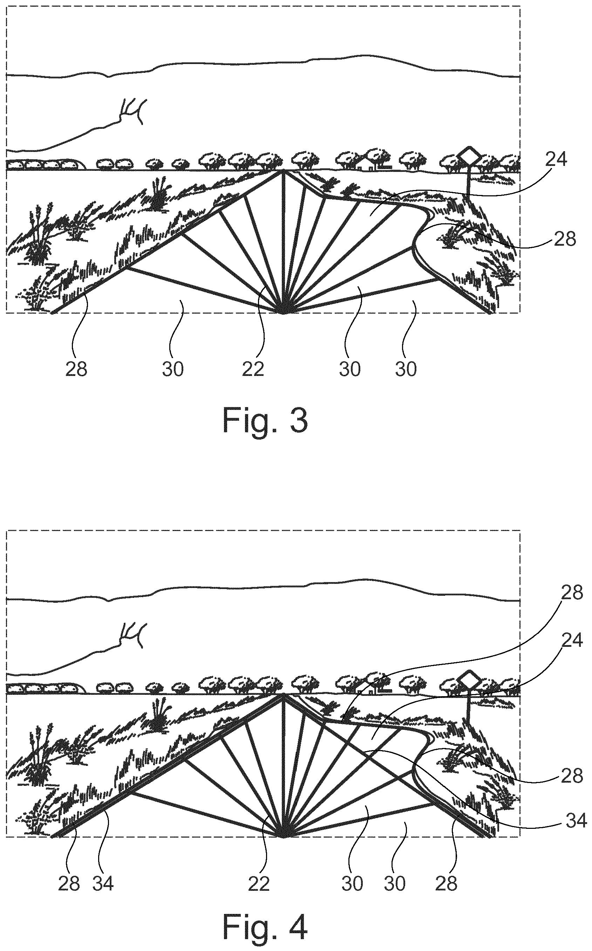

In step S110, the method continues with a step of segmenting a road area 26 in the consecutive video frames. The step is performed in road segmentation module 54 of the pullout feedback module 52. Hence, the road area 26, which is the entire area identified as road, including the single-lane road 22 and the passing place 24, is detected. The road area 26 is shown e.g. in Fig. 4 as delimited by road boundary 28. According to step S110, first the road area 26 is recognized in the consecutive video frames. Hence, the road area is identified by means of its distinguishing features compared to the surrounding environment. A luminance based and/or a color based and/or a texture based segmentation algorithm is performed. Such algorithms are known in the Art and need not to be discussed in detail. Then, the road area 26 is segmented into multiple freespace sectors 30. A number of freespace sectors 30 can be chosen suitably, e.g. in a way that each freespace sector 30 covers an angle of 15°, as can be seen in Fig. 2. Step S110 is performed by road segmentation module 54 of the pullout feedback module 52, as can be seen in Fig. 5.

In step S120, a single-lane road scenario is detected based on road segmentation freespace of the freespace sectors 30. The single-lane road scenario refers to a scenario as mentioned above, where the single-lane road 22 in general permits two-way travel, but where the single-lane road 22 is not wide enough in most places to allow two vehicles 10 to pass one another. Hence, the single-lane roads 22 are provided with passing places 24, as referred to in the United Kingdom, or pullouts, which enable two vehicles 10 to pass each other. The single-lane road scenario is detected based on the above road segmentation and a resulting freespace of the different freespace sectors 30. The segmentation of the freespace is based on the road boundaries 28, which define the road area 26.

In addition, also the passing places 24 are detected along the single-lane road 22 based on the segmentation of the detected road. Accordingly, a spatial analysis of the freespace sectors 30 is performed. The length of the freespace sectors 30 typically varies with the relative position of a freespace sector 30. The single-lane road 22 has lengthy freespace sectors 30, which correspond to the middle of the single-lane road 22, whereas lateral freespace sectors 30 experience a sharp reduction in length and thereby in freespace, since they are limited by left and right boundaries of the road area 26. A stable, average freespace sector pattern, which defines average boundaries 34 as shown in Fig. 4, is stored in a persistent memory 64 for detection of passing places 24, which deviate from this average freespace sector pattern and the average boundaries 34.

Step S120 is performed by narrow road & road edge detection module 56 of the control unit 18, as can be seen in Fig. 5.

Step S130 refers to detecting the passing places 24 along the single-lane road 22, which comprises a detection and analysis of lateral road edge boundaries 32. Left and right boundaries of the single-lane road 22 are typically straight and essentially parallel to each other. This is represented by the average freespace sector pattern. Hence, when a passing place 24 is provided, the passing place 24 is typically provided with the same material as the single-lane road 22 itself, so that a lateral extension of the road area 26 appears. Accordingly, the freespace of the lateral freespace sectors 30 is essentially bigger than for the average freespace sector pattern. In this case, the respective freespace sector 30 has an increased length in an area of the passing place 24. Step S130 is performed by pullout detection module 58 of the control unit 18, as can be seen in Fig. 5.

Step S140 refers to storing information of the detected passing places 24 along the single-lane road 22. The information of the passing places 24 is stored in the persistent memory 64 of the vehicle 10 or the driving assistance system 12. Storing the information of passing places 24 comprises determining and storing positions of the passing places 24. The information of a closest passing place 24 out of the stored passing places 24 is displayed to a driver of the vehicle 10. Displaying the information comprises displaying a current position and driving information between the current position and the position of the closest passing place 24. The positions can be displayed e.g. as local map, which provides a trajectory from the current position to the closest passing place 24. Step S140 is performed by localization and mapping module 60 of the control unit 18, as can be seen in Fig. 5.

According to step S150, a distance to the closest passing place 24 is continuously monitored and displayed, and the step of displaying the information regarding the closest passing place 24 to a driver of the vehicle 10 comprises displaying a distance to the closest passing place 24. The distance to the closest passing place 24 is determined based on satellite navigation data, which are GPS data in this embodiment, together with map information. Additionally, the distance to the closest passing place 24 is monitored based on the determined vehicle odometry information, which comprises a steering wheel angle, a vehicle speed, and wheel rotation of one or multiple wheels, in particular wheel tics. Hence, the method comprises an additional step of determining vehicle odometry information, as specified above. Furthermore, a vehicle movement is determined from the closest passing place 24 onwards to the present location. Based on the odometry information, a movement path is determined, which can be followed in a reverse direction to return to the closest passing place 24. Still further, a local map is generated based on the odometry information. Monitoring and displaying the information is performed by localization and mapping module 60 of the control unit 18, as can be seen in Fig. 5, which receives the odometry information from vehicle odometry module 62. Data is output to display output module 64.

In step S160, upon detection of oncoming traffic, at least part of the stored information regarding the closest passing place 24 is displayed to a driver of the vehicle 10. Also here, the data is output to display output module 66. The driver can confirm to start subsequent step S170.

According to step S170, an autonomous driving maneuver from the current position to the position of the closest passing place 24 is performed. When performing the autonomous driving maneuver, the vehicle 10 is moved by the driving assistance system 12, until the closest passing place 24 has been reached. Step S170 is started by a driver operation, e.g. the driver starts the autonomous driving maneuver by acknowledging the information displayed by the driving assistance system 12. The autonomous driving maneuver from the current position to the position of the closest passing place 24 is performed by an auto pullout maneuver system 68 of the control unit 18, which can be seen in Fig. 6. Some modules of the auto pullout maneuver system 68 are identical to those of the pullout feedback module 52, and are not discussed again in detail. Hence, reference numerals for such modules have not been changed.

Accordingly, input 50 with captured consecutive video frames is received from the rear camera 16, since the vehicle 10 has to move backwards to the closest passing place 24. The input 50 is provided to and processed by the road segmentation module 54, the narrow road & road edge detection module 56, and the pullout detection module 58, as discussed above in respect to the pullout feedback module 52.

When the closest passing place 24 has been reached, the maneuver of the vehicle 10 to the position of the closest passing place 24 is stopped, and the vehicle 10 is maneuvered from the single-lane road 22 onto the passing place 24, so that the oncoming traffic can pass the vehicle 10. The vehicle 10 is maneuvered onto the passing place 24 autonomously by the driving assistance system 12 by pullout maneuver module 70, which receives odometry information from vehicle odometry 62. The pullout maneuver module 70 controls the vehicle 10 via output module 76 break, accelerate, and to steer the vehicle 10 by changing its direction.

While the autonomous driving maneuver from the current position to the position of the closest passing place 24 is performed, localized map information is extracted from the persistent memory module 64 and displayed to the driver. The localized map information is provided based on e.g. stored map information, in particular together with received satellite position signals, e.g. GPS signals, which specify a particular position on the localized map. The stored further comprise odometry information of the vehicle 10. Hence, the local map can be generated under additional consideration of this odometry information. This is performed in extract stored localized map and distance update module 72. Information display is provided via display module 74.

Furthermore, during the maneuver performed in step S170, display module 74 performs a continuous displaying operation of a start of the autonomous driving maneuver, a remaining distance to the closest passing place 24, a velocity of the vehicle 10, an acceleration of the vehicle 10, and a steering operation of the vehicle 10. The information is displayed on a screen of the vehicle 10, in particular of the driving assistance system 12, even more particular of the display module 74, so that vehicle occupants, and in particular a driver of the vehicle 10, are continuously informed in respect to a current state of the autonomous driving maneuver.

According to step S180, the method provides the stored positions of the detected passing places 24 to a server. Step S180 can be performed essentially at any time after detection of the passing places 24. The information regarding located passing places 24 is transmitted from the server to other vehicles 10 in the area, which do not have a proper assistance system 12 capable to detect passing places 24.

## Claims

1. Method for driving assistance for a vehicle (10) on a single-lane road (22) with passing places (24), comprising the steps of
capturing (S100) consecutive video frames from a camera (14) covering a driving direction of the vehicle (10),
segmenting (S110) a road area (26) in the consecutive video frames into multiple freespace sectors (30),
detecting (S120) a single-lane road scenario based on road segmentation freespace of the freespace sectors (30),
detecting (S130) the passing places (24) along the single-lane road (22),
storing (S140) information of passing places along the single-lane road, and
upon detection of oncoming traffic, displaying the information regarding the closest passing place (24) to a driver of the vehicle (10) wherein
the step of detecting a single-lane road scenario based on road segmentation freespace comprises additional steps of
segmentation of the freespace sectors (30) based on road boundaries (28), and performing a spatial analysis of the freespace sectors (30)
wherein the step of detecting passing places (24) along the single-lane road (22) comprises detection and analysis of lateral road edge boundaries (28) and
detection of the passing places (24), which deviate from average freespace sector pattern, which defines average boundaries (34), stored in a persistent memory (64).

2. Method according to claim 1, wherein
the method comprises an additional step of performing an autonomous driving maneuver from the current position to the position of the closest passing place (24).

3. Method according to claim 2, wherein
the step of performing an autonomous driving maneuver from the current position to the position of the closest passing place (24) comprises in a backward driving direction of the vehicle (10) performing the steps of
capturing consecutive video frames from a camera (16) covering the backward driving direction of the vehicle (10),
segmenting a road area (26) in the consecutive video frames, and
detecting the closest passing place (24) along the single-lane road (22).

4. Method according to any of preceding claims 2 or 3, wherein
the step of performing an autonomous driving maneuver from the current position to the position of the closest passing place (24) comprises extracting localized map information from a storage and displaying the extracted localized map information to the driver.

5. Method according to any preceding claim, wherein
the step of segmenting a road area (26) in the consecutive video frames comprises performing a luminance based and/or a color based and/or a texture based segmentation algorithm.

6. Method according to any preceding claim, wherein
the method comprises an additional step of monitoring a distance to the closest passing place (24), and
the step of displaying the information regarding the closest passing place (24) to a driver of the vehicle (10) comprises displaying a distance to the closest passing place (24).

7. Method according to claim 6, wherein
the step of monitoring a distance to the closest passing place (24) comprises determining the distance to the closest passing place (24) based on satellite navigation data.

8. Method according to claim 7, wherein
the step of monitoring a distance to the closest passing place (24) comprises additional steps of
determining vehicle odometry information, and
determining a distance to the closest passing place (24) based on the odometry information.

9. Method according to any preceding claim, wherein
the method comprises an additional step of determining vehicle odometry information, and determining a vehicle movement from the closest passing place (24).

10. Method according to any preceding claim, wherein
the step of storing information of passing places (24) along the single-lane road (22) comprises determining and storing positions of the passing places (24), and the step of displaying the information regarding the closest passing place (24) to a driver of the vehicle (10) comprises displaying a current position and driving information between the current position and the position of the closest passing place (24).

11. Method according to any preceding claim, wherein
the method comprises an additional step of providing the stored positions of the passing places (24) to a server.

12. Driving assistance system (12) for a vehicle (10), **characterized in that** the driving assistance system (12) is adapted to perform the method according to any preceding claim to perform driving assistance of a vehicle (10) on a single-lane road (22) with passing places (24).

13. Vehicle (10) with a driving assistance system (12) according to preceding claim 12.

## Patentansprüche

1. Verfahren für eine Fahrassistenz für ein Fahrzeug (10) auf einer einspurigen Straße (22) mit Ausweichstellen (24), das die folgenden Schritte umfasst Erfassen (S100) von aufeinanderfolgenden Videoframes von einer Kamera (14), die eine Fahrtrichtung des Fahrzeugs (10) abdecken,
Segmentieren (S110) eines Straßenbereichs (26) in den aufeinanderfolgenden Videoframes in mehrere Freiraumsektoren (30),
Detektieren (S120) eines Szenarios mit einer einspurigen Straße auf Basis eines Straßensegmentierungsfreiraums der Freiraumsektoren (30),
Detektieren (S130) der Ausweichstellen (24) entlang der einspurigen Straße (22),
Speichern (S140) von Informationen von Ausweichstellen entlang der einspurigen Straße und nach Detektion von entgegenkommendem Verkehr Anzeigen der Informationen über die nächste Ausweichstelle (24) für einen Fahrer des Fahrzeugs (10), wobei
der Schritt des Detektierens eines Szenarios mit einer einspurigen Straße auf Basis eines Straßensegmentierungsfreiraums die folgenden zusätzlichen Schritte umfasst
Segmentierung der Freiraumsektoren (30) auf Basis von Straßenbegrenzungen (28) und
Durchführen einer räumlichen Analyse der Freiraumsektoren (30), wobei
der Schritt des Detektierens von Ausweichstellen (24) entlang der einspurigen Straße (22) Folgendes umfasst Detektion und Analyse von seitlichen Straßenrandbegrenzungen (28) und
Detektion der Ausweichstellen (24), die von einem durchschnittlichen
Freiraumsektormuster abweichen, das durchschnittliche Begrenzungen (34) definiert, die in einem persistenten Speicher (64) gespeichert sind.

2. Verfahren nach Anspruch 1, wobei
das Verfahren ferner einen zusätzlichen Schritt des Durchführens eines autonomen Fahrmanövers von der aktuellen Position zur Position der nächsten Ausweichstelle (24) umfasst.

3. Verfahren nach Anspruch 2, wobei
der Schritt des Durchführens eines autonomen Fahrmanövers von der aktuellen Position zur Position der nächsten Ausweichstelle (24) in einer Rückwärtsfahrtrichtung des Fahrzeugs (10) das Durchführen der folgenden Schritte umfasst
Erfassen von aufeinanderfolgenden Videoframes von einer Kamera (16), die die Rückwärtsfahrtrichtung des Fahrzeugs (10) abdecken,
Segmentieren eines Straßenbereichs (26) in den aufeinanderfolgenden Videoframes und
Detektieren der nächsten Ausweichstelle (24) entlang der einspurigen Straße (22) .

4. Verfahren nach einem der vorhergehenden Ansprüche 2 oder 3, wobei
der Schritt des Durchführens eines autonomen Fahrmanövers von der aktuellen Position zur Position der nächsten Ausweichstelle (24) das Extrahieren von lokalisierten Karteninformationen aus einem Speicher und Anzeigen der extrahierten lokalisierten Karteninformationen für den Fahrer umfasst.

5. Verfahren nach einem der vorhergehenden Ansprüche, wobei
der Schritt des Segmentierens eines Straßenbereichs (26) in den aufeinanderfolgenden Videoframes das Durchführen eines luminanzbasierten und/oder eines farbbasierten und/oder eines texturbasierten Segmentierungsalgorithmus umfasst.

6. Verfahren nach einem der vorhergehenden Ansprüche, wobei
das Verfahren ferner einen zusätzlichen Schritt des Überwachens eines Abstands zur nächsten Ausweichstelle (24) umfasst und
der Schritt des Anzeigens der Informationen über die nächste Ausweichstelle (24) für einen Fahrer des Fahrzeugs (10) das Anzeigen eines Abstands zur nächsten Ausweichstelle (24) umfasst.

7. Verfahren nach Anspruch 6, wobei
der Schritt des Überwachens eines Abstands zur nächsten Ausweichstelle (24) das Bestimmen des Abstands zur nächsten Ausweichstelle (24) auf Basis von Satellitennavigationsdaten umfasst.

8. Verfahren nach Anspruch 7, wobei
der Schritt des Überwachens eines Abstands zur nächsten Ausweichstelle (24) die folgenden zusätzlichen Schritte umfasst
Bestimmen von Fahrzeugodometrieinformationen und Bestimmen eines Abstands zur nächsten Ausweichstelle (24) auf Basis der Odometrieinformationen.

9. Verfahren nach einem der vorhergehenden Ansprüche, wobei
das Verfahren einen zusätzlichen Schritt des Bestimmens von Fahrzeugodometrieinformationen und des Bestimmens einer Fahrzeugbewegung von der nächsten Ausweichstelle (24) umfasst.

10. Verfahren nach einem der vorhergehenden Ansprüche, wobei
der Schritt des Speicherns von Informationen von Ausweichstellen (24) entlang der einspurigen Straße (22) das Bestimmen und Speichern von Positionen der Ausweichstellen (24) umfasst und der Schritt des Anzeigens der Informationen über die nächste Ausweichstelle (24) für einen Fahrer des Fahrzeugs (10) das Anzeigen einer aktuellen Position und von Fahrinformationen zwischen der aktuellen Position und der Position der nächsten Ausweichstelle (24) umfasst.

11. Verfahren nach einem der vorhergehenden Ansprüche, wobei
das Verfahren ferner einen zusätzlichen Schritt des Bereitstellens der gespeicherten Positionen der Ausweichstellen (24) für einen Server umfasst.

12. Fahrassistenzsystem (12) für ein Fahrzeug (10), **dadurch gekennzeichnet, dass** das Fahrassistenzsystem (12) angepasst ist, das Verfahren nach einem der vorhergehenden Ansprüche durchzuführen, um eine Fahrassistenz eines Fahrzeugs (10) auf einer einspurigen Straße (22) mit Ausweichstellen (24) durchzuführen.

13. Fahrzeug (10) mit einem Fahrassistenzsystem (12) nach dem vorhergehenden Anspruch 12.

## Revendications

1. Procédé d'aide à la conduite pour un véhicule (10) sur une route à une seule voie (22) avec des voies d'évitement (24), comprenant les étapes suivantes la capture (S100) de trames vidéo consécutives depuis une caméra (14) couvrant le sens de la conduite du véhicule (10),
la segmentation (S110) d'une surface de route (26) dans les trames vidéo consécutives en multiples secteurs d'espace libre (30),
la détection (S120) d'un scénario de route à une seule voie sur la base d'un espace libre de segmentation de route des secteurs d'espace libre (30),
la détection (S130) des voies d'évitement (24) le long de la route à une seule voie (22),
le stockage (S140) d'informations sur les voies d'évitement le long de la route à une seule voie, et suite à la détection d'un trafic arrivant, l'affichage des informations relatives à la voie d'évitement (24) la plus proche pour un utilisateur du véhicule (10), dans lequel
l'étape de détection d'un scénario de route à une seule voie sur la base d'un espace libre de segmentation de route comprend les étapes supplémentaires suivantes la segmentation des secteurs d'espace libre (30) sur la base de limites (28) de la route, et
la réalisation d'une analyse spatiale des secteurs d'espace libre (30), dans lequel
l'étape de détection des voies d'évitement (24) le long de la route à une seule voie (22) comprend
la détection et l'analyse de limites périphériques latérales (28) de la route, et
la détection des voies d'évitement (24), qui s'écartent d'un
schéma moyen de secteur d'espace libre, qui définit des limites moyennes (34), stockées dans une mémoire persistante (64).

2. Procédé selon la revendication 1, dans lequel le procédé comprend une étape supplémentaire d'exécution d'une manoeuvre de conduite autonome de la position courante à la position de la voie d'évitement (24) la plus proche.

3. Procédé selon la revendication 2, dans lequel l'étape d'exécution d'une manoeuvre de conduite autonome de la position courante à la position de la voie d'évitement (24) la plus proche comprend, dans un sens de conduite arrière du véhicule (10), l'exécution des étapes suivantes
la capture de trames vidéo consécutives depuis une caméra (16) couvrant le sens de conduite arrière du véhicule (10),
la segmentation d'une surface de route (26) dans les trames vidéo consécutives, et
la détection de la voie d'évitement (24) la plus proche le long de la route à une seule voie (22).

4. Procédé selon l'une quelconque des revendications précédentes 2 à 3, dans lequel
l'étape d'exécution d'une manoeuvre de conduite autonome de la position courante à la position de la voie d'évitement (24) la plus proche comprend l'extraction d'informations de carte localisées d'une mémoire et l'affichage des informations de carte localisées pour le conducteur.

5. Procédé selon l'une quelconque des revendications précédentes, dans lequel
l'étape de segmentation d'une surface de route (26) dans les trames vidéo consécutives comprend l'exécution d'un algorithme de segmentation basé sur la luminance et/ou basé sur la couleur et/ou basé sur la texture.

6. Procédé selon l'une quelconque des revendications précédentes, dans lequel
le procédé comprend une étape supplémentaire de surveillance d'une distance à la voie d'évitement (24) la plus proche, et
l'étape d'affichage des informations relatives à la voie d'évitement (24) la plus proche pour un conducteur du véhicule (10) comprend l'affichage d'une distance à la voie d'évitement (24) la plus proche.

7. Procédé selon la revendication 6, dans lequel l'étape de surveillance d'une distance à la voie d'évitement (24) la plus proche comprend la détermination de la distance à la voie d'évitement (24) la plus proche sur la base de données de navigation par satellite.

8. Procédé selon la revendication 7, dans lequel l'étape de surveillance d'une distance à la voie d'évitement (24) la plus proche comprend les étapes supplémentaires suivantes
la détermination d'informations d'odométrie du véhicule, et
la détermination d'une distance à la voie d'évitement (24) la plus proche sur la base des informations d'odométrie.

9. Procédé selon l'une quelconque des revendications précédentes, dans lequel
le procédé comprend une étape supplémentaire de détermination d'informations d'odométrie du véhicule, et de détermination d'un mouvement du véhicule depuis la voie d'évitement (24) la plus proche.

10. Procédé selon l'une quelconque des revendications précédentes, dans lequel
l'étape de stockage d'informations sur les voies d'évitement (24) le long de la route à une seule voie (22) comprend la détermination et le stockage de positions des voies d'évitement (24), et l'étape d'affichage des informations relatives à la voie d'évitement (24) la plus proche pour un conducteur du véhicule (10) comprend l'affichage d'une position courante et d'informations de conduite entre la position courante et la position de la voie d'évitement (24) la plus proche.

11. Procédé selon l'une quelconque des revendications précédentes, dans lequel
le procédé comprend une étape supplémentaire de fourniture des positions stockées des voies d'évitement (24) à un serveur.

12. Système d'aide à la conduite (12) pour un véhicule (10), **caractérisé en ce que** le système d'aide à la conduite (12) est conçu pour exécuter le procédé selon l'une quelconque des revendications précédentes pour effectuer une aide à la conduite d'un véhicule (10) sur une route à une seule voie (22) comportant des voies d'évitement (24) .

13. Véhicule (10) comprenant un système d'aide à la conduite (12) selon la revendication précédente 12.
